# FASCICULE DE BREVET EUROPEEN

(11) **EP 4 352 612 B1**
(45) Date de publication et mention de la délivrance du brevet: **07.05.2025**
(21) Numéro de dépôt: 22735791.0
(22) Date de dépôt: 10.06.2022
(51) Int. Cl.: G06F 9/48, G06N 5/01, G06F 9/455, G06N 7/01, H04W 36/32

(54) **PROCÉDÉ ET SYSTÈME D'EXÉCUTION À DISTANCE DE SERVICES REQUIS PAR UN DISPOSITIF MOBILE VIA UN RÉSEAU DE COMMUNICATION CELLULAIRE**
VERFAHREN UND SYSTEM ZUR FERNAUSFÜHRUNG VON DIENSTEN, DIE VON EINEM MOBILGERÀT ERFORDERLICH SIND, ÜBER EIN MOBILES KOMMUNIKATIONSNETZ
METHOD AND SYSTEM FOR REMOTELY PERFORMING SERVICES REQUIRED BY A MOBILE DEVICE VIA A CELLULAR COMMUNICATION NETWORK

(30) Priorité: 11.06.2021 FR 2106200
(43) Date de publication de la demande: 17.04.2024
(73) Titulaire: Commissariat à l'Energie Atomique et aux Energies Alternatives, 75015 Paris (FR); Renault SAS, 92100 Boulogne Billancourt (FR)
(72) Inventeur: LABRIJI, Ibtissam, 31100 TOULOUSE (FR); CALVANESE STRINATI, Emilio, 38054 GRENOBLE CEDEX 9 (FR); JOLY, Frédéric, 06560 VALBONNE (FR); PERRAUD, Eric, 31830 PLAISANCE DU TOUCH (FR)
(74) Mandataire: Lavoix
(86) Numéro de dépôt international: PCT/EP2022/065827
(87) Numéro de publication internationale: WO 2022/258806

(56) Documents cités:
- US-A1- 2020 249 039
- LABRIJI IBTISSAM ET AL: "Mobility Aware and Dynamic Migration of MEC Services for the Internet of Vehicles", IEEE TRANSACTIONS ON NETWORK AND SERVICE MANAGEMENT, IEEE, USA, vol. 18, no. 1, 19 January 2021 (2021-01-19), pages 570 - 584, XP011842204, DOI: 10.1109/TNSM.2021.3052808
- LABRIJI IBTISSAM ET AL: "On Seamless Offloading of Delay Sensitive Vehicular Services over Mobile Edge Computing", 7 December 2020 (2020-12-07), pages 1 - 6, XP055895590, ISBN: 978-1-7281-7307-8, Retrieved from the Internet <URL:https://ieeexplore.ieee.org/stampPDF/getPDF.jsp?tp=&arnumber=9367409&ref=aHR0cHM6Ly9pZWVleHBsb3JlLmllZWUub3JnL2RvY3VtZW50LzkzNjc0MDk=> [retrieved on 20220225], DOI: 10.1109/GCWkshps50303.2020.9367409
- MACH PAVEL ET AL: "Mobile Edge Computing: A Survey on Architecture and Computation Offloading", vol. 19, no. 3, 2017, pages 1628 - 1656, XP055895691, Retrieved from the Internet <URL:https://ieeexplore.ieee.org/stampPDF/getPDF.jsp?tp=&arnumber=7879258&ref=aHR0cHM6Ly9pZWVleHBsb3JlLmllZWUub3JnL2RvY3VtZW50Lzc4NzkyNTg=> [retrieved on 20220225], DOI: 10.1109/COMST.2017.2682318

## Description

La présente invention concerne un procédé et un système d'exécution à distance de services requis par au moins un dispositif mobile, notamment embarqué à bord d'un véhicule, via un réseau de communication cellulaire selon un protocole de communication au moins de quatrième génération.

L'invention se situe dans le domaine de l'exécution de services à distance pour dispositifs mobiles, notamment pour des véhicules, en particulier dans le cadre de l'Internet des Véhicules (loV pour « Internet of Vehicles »).

Les technologies de communication cellulaire de quatrième génération, 4G, et plus encore de cinquième génération, 5G, offrent la possibilité de communication de quantités de données significatives, à faible latence et avec une qualité de connectivité garantie pour des équipements en déplacement. Dans le domaine des véhicules connectés, cela permet de développer la communication entre véhicules et serveurs distants, les systèmes de transport intelligents (ou ITS pour « Intelligent Transport Systems »), et plus généralement la mise en oeuvre de divers services pour divers types d'applications.

Le terme service désigne ici toute application logicielle mettant en oeuvre des échanges de données. Par exemple, dans le cas des véhicules connectés, les services comprennent des services d'assistance à la conduite, la gestion du trafic routier (par exemple la transmission en amont d'informations relatives à l'encombrement routier, aux accidents permettant de prévoir des routes alternatives), et la fourniture de flux multimédia d'information ou de loisir (en anglais « infotainment »).

La technologie du calcul mobile à distance ou MEC ou Mobile Edge Computing, développée dans le cadre des réseaux de communication cellulaires de cinquième génération, permet de déporter des applications logicielles consommatrices de ressources de calcul vers des serveurs de calculs distants (serveurs MEC), placés à la périphérie du réseau de communication. Il est également possible de déporter de telles applications logicielles vers d'autres serveurs distants (par exemple des serveurs formant un « cloud »). Ainsi, le réseau de serveurs distants, de type MEC ou de type « cloud », devient une unité de contrôle électronique (en anglais ECU) virtuelle pour tout dispositif mobile (e.g. véhicule) connecté.

Une principale difficulté technologique est d'assurer un niveau de qualité de service satisfaisant pour des véhicules qui sont en mouvement. En effet, de manière connue dans le domaine des communications cellulaires, en se déplaçant, l'équipement utilisateur change de zone géographique de couverture, et donc il est nécessaire d'assurer une continuité des communications, par des mécanismes de passage de relais (en anglais « handover »), définis par les standards de télécommunications. De manière analogue, le déplacement d'un véhicule induit une distanciation par rapport à un serveur hôte ou MEH (pour « Mobile Edge Host ») qui exécute un service, et un risque d'interruption, donc la continuité de service n'est pas assurée.

La gestion de l'exécution déportée de services en tenant compte de la mobilité des véhicules, de manière efficace en termes de ressources utilisées et tout en garantissant niveau de continuité de service requis, est un problème à résoudre.

Pour résoudre ce problème il a été proposé d'effectuer des migrations d'une machine virtuelle d'exécution d'un service sur un ou plusieurs serveurs hôtes associés à des zones géographiques de couverture de communication, adjacentes à la zone géographique de couverture courante d'un véhicule, qui sont susceptibles d'être traversées par le véhicule avec une certaine probabilité associée.

La migration comprend l'arrêt de l'exécution par le serveur hôte courant à une instance d'exécution, et la réplication de la machine virtuelle sur chaque serveur hôte prévu. La réplication consiste en la recopie complète d'une instance d'exécution du service, et d'un contexte d'exécution (variables, paramètres), également appelé état de l'instance d'exécution. La reprise de l'exécution ne peut être effectuée que lorsque la réplication est complète, correctement effectuée. Une réplication incomplète ou incorrecte peut induire une interruption de service.

Une solution envisageable consisterait à choisir un seul serveur hôte prédit pour la migration, et donc à réaliser une seule réplication de machine virtuelle. Dans ce cas, la consommation de ressources est limitée, mais le risque d'interruption de service, en cas d'erreur de prédiction du serveur hôte, est élevé.

Alternativement, une réplication complète sur tous les serveurs hôtes disponibles apporterait une garantie de continuité de service, mais avec un coût de consommation de ressources calculatoires et un coût d'énergie de réplication élevés.

L'article « Mobility aware and dynamic migration of MEC services for the Internet of Vehicles" de Ibtissam LABRIJI et al, publié dans IEEE Transactions on Network and Service Management 2021, vol. 18, n°1, pages 570-584, propose une réplication partielle, le nombre de réplications étant calculé de manière à minimiser un coût d'énergie de réplication tout en limitant un risque de perte de la continuité de service.

En plus du nombre de réplications de machine virtuelle à effectuer lors de la migration, se pose la question du moment temporel du déclenchement de la migration, pour chaque requête de service émise par un véhicule, tout en maintenant un objectif de minimisation de coût d'énergie de réplication et de limitation du risque de perte de la continuité de service.

A cet effet, l'invention propose un procédé d'exécution à distance de services requis par au moins un dispositif mobile, notamment embarqué à bord d'un véhicule, via un réseau de communication cellulaire selon un protocole de communication au moins de quatrième génération, un service étant exécuté par une machine virtuelle d'un serveur de calcul, dit serveur hôte courant, le dispositif mobile émetteur d'une requête de service ayant une position appartenant à une zone géographique de couverture de communication cellulaire courante, ledit serveur hôte courant étant associé à la zone géographique de couverture courante. Ce procédé comporte les étapes suivantes, mises en oeuvre par un processeur dudit serveur hôte courant, pour une requête de service donnée, reçue pendant un intervalle temporel courant:
- a) pour l'intervalle temporel courant, calcul d'un vecteur de probabilités à K composantes, chaque composante étant associée à un instant temporel donné d'un ensemble de K instants temporels prédéterminé, chaque composante du vecteur de probabilités correspondant à une probabilité de migration à l'instant temporel associé, la migration consistant en au moins une réplication de la machine virtuelle exécutant ledit service sur un serveur hôte choisi appartenant à une zone géographique de couverture contiguë à ladite zone géographique de couverture courante, le calcul des composantes du vecteur de probabilités mettant en oeuvre un ensemble de K poids, chaque poids étant associé à un instant temporel de migration et représentatif d'un gain prédit pour une migration audit instant temporel de migration associé,
- b) sélection dans ledit ensemble de K instants temporels d'un instant temporel, dit instant temporel de migration sélectionné, en fonction du vecteur de probabilités calculé, l'instant temporel de migration sélectionné ayant une probabilité de migration correspondante maximale dans le vecteur de probabilités calculé,
- c) détermination, pour la migration à l'instant temporel de migration sélectionné, d'un nombre de réplications de la machine virtuelle à effectuer à l'instant temporel de migration sélectionné pour minimiser un coût en énergie de réplication tout en assurant un niveau de continuité de service, et calcul d'un gain prédit pour ladite migration à l'instant temporel de migration sélectionné.

Avantageusement, le procédé d'exécution à distance de services requis par au moins un dispositif mobile, notamment embarqué à bord d'un véhicule, permet de choisir un instant temporel de migration parmi un ensemble d'instants temporels, de manière à optimiser un gain prédit associé.

De plus, le procédé permet d'obtenir conjointement un instant temporel de migration et un nombre de réplications à effectuer.

Le procédé d'exécution à distance de services requis par au moins un dispositif mobile, notamment embarqué à bord d'un véhicule selon l'invention peut également présenter une ou plusieurs des caractéristiques ci-dessous, prises indépendamment ou selon toutes les combinaisons techniquement envisageables.

Le procédé comporte en outre une mémorisation de l'instant temporel de migration sélectionné et du nombre de réplications de la machine virtuelle à effectuer pour ladite requête de service donnée.

Le procédé est mis en oeuvre par ledit serveur hôte courant pour une pluralité de requêtes de service sur une succession d'intervalles temporels, et comporte une étape d) mise à jour du poids associé à l'instant temporel de migration sélectionné, pour un intervalle temporel suivant, la mise à jour étant fonction dudit gain prédit, et répétition des étapes a) à d) pour l'intervalle temporel suivant.

La mise à jour du poids met en oeuvre une fonction exponentielle dudit gain prédit, et la probabilité associée à l'instant temporel de migration sélectionné pour l'intervalle temporel courant.

Le poids associé à l'instant temporel sélectionné pour l'intervalle temporel suivant est obtenu par la formule : ${ω}_{k ∗} \left(t+1\right) = {ω}_{k ∗} \left(t\right) {e}^{\frac{{ρx}_{k ∗} \left(t\right)}{{Kp}_{k ∗} \left(t\right)}}$

Où k* est l'indice de l'instant temporel de migration sélectionné, *ω_{k*}*(*t*) est le poids associé à l'instant temporel sélectionné pour l'intervalle temporel courant (t), *ω_{k*}*(*t +* 1) est le poids associé à l'instant temporel sélectionné pour l'intervalle temporel suivant (t+1), ρ est un paramètre de pondération, et *p_{k*}*(*t*) est la probabilité associée à l'instant temporel de migration sélectionné.

Pour l'intervalle temporel courant, la probabilité associée à l'instant temporel Tₖ d'indice k est calculée par la formule : ${p}_{k} \left(t\right) = \left(1-ρ\right) \frac{{ω}_{k} \left(t\right)}{{\sum }_{j = 1}^{K} {ω}_{j} \left(t\right)} + \frac{ρ}{K} pour tout k ∈ \left\{1,2, …,K\right\}$

Le paramètre de pondération est calculé dynamiquement en fonction d'un calcul de gain global cumulé pour chaque instant temporel, le gain global cumulé étant, pour chaque instant temporel, incrémenté, pour chaque requête de service traitée, du gain prédit pour la migration lorsque ledit instant temporel est sélectionné comme instant temporel de migration.

La valeur de paramètre de pondération est modifiée lorsque le gain global cumulé maximum parmi lesdits gains globaux calculés dépasse un seuil dépendant du nombre d'instants temporels.

La détermination, pour la migration à l'instant temporel de migration sélectionné, pour chaque requête de service, d'un nombre de réplications de la machine virtuelle à effectuer à l'instant temporel de migration sélectionné, chaque réplication étant effectuée sur un serveur hôte choisi, met en oeuvre une minimisation d'une fonction objectif dépendant d'une énergie consommée pour ledit nombre de réplications, sous contrainte d'une métrique de risque associée à l'accessibilité du ou des serveurs hôtes choisis pour la réplication et d'une métrique de disponibilité, pour chaque réplication, de la machine virtuelle après réplication déclenchée à l'instant temporel de migration sélectionné.

La métrique de risque utilise une probabilité représentative d'une prédiction de mobilité, associée à chaque serveur hôte choisi, représentative de la probabilité que le dispositif mobile émetteur de ladite requête de service entre dans une zone de couverture géographique associée audit serveur hôte choisi.

Pour un instant temporel de migration choisi, et pour une requête r(t) donnée, ladite métrique de risque est définie par $Risque \left(r\left(t\right),k*,{M}_{r}^{k *}{\left(t\right)}^{*}\right) = 1 - {\sum }_{i = 1}^{{M}_{r}^{k *} \left(t\right) *} {p}_{r , k * , i}^{s} \left(t\right)$

Où k* est l'indice de l'instant temporel de migration sélectionné, ${M}_{r}^{k *} \left(t\right) *$ est le nombre de réplications de la machine virtuelle optimal calculé et ${p}_{r , k * , i}^{s} \left(t\right)$ est la probabilité représentative d'une prédiction de mobilité associée à un serveur hôte d'indice i.

La métrique de disponibilité utilise, pour chaque réplication de machine virtuelle, une comparaison d'une durée de migration de la machine virtuelle et d'un temps restant avant un changement de serveur hôte pour le dispositif mobile émetteur de ladite requête de service.

L'énergie consommée est calculée en fonction du nombre de réplications et d'une taille de la machine virtuelle à migrer.

La détermination, pour la migration à l'instant temporel de migration sélectionné, pour chaque requête de service, d'un nombre de réplications de la machine virtuelle à effectuer à l'instant temporel de migration sélectionné met en oeuvre, pour une pluralité de requêtes de service reçues sur un intervalle temporel courant, un calcul de risque moyen et un calcul de disponibilité moyenne sur ladite pluralité de requêtes.

Le risque moyen calculé pour l'intervalle temporel courant est mis en oeuvre pour construire une première queue virtuelle, pour un intervalle temporel suivant, en fonction d'un premier paramètre de contrôle associé, et ladite disponibilité moyenne est mise en oeuvre pour construire une deuxième queue virtuelle, pour un intervalle temporel suivant, en fonction d'un deuxième paramètre de contrôle associé, la fonction objectif à minimiser étant dépendante desdites première et deuxième queues virtuelles.

Pour une requête de service donnée, et pour un instant temporel de migration sélectionné, le gain prédit est égal à la valeur de ladite fonction objectif pour le nombre de réplications de la machine virtuelle déterminé.

A chaque instant temporel est associé un nombre maximum de serveurs hôtes candidats, le nombre maximum de serveurs hôtes candidats associé à chaque instant temporel étant décroissant dans l'ordre croissant des instants temporels.

Selon un autre aspect, l'invention concerne un système d'exécution à distance de services requis par au moins un dispositif mobile, notamment embarqué à bord d'un véhicule, le système comportant un réseau de communication cellulaire selon un protocole de communication au moins de quatrième génération, et une pluralité de serveurs de calcul, un service étant exécuté par une machine virtuelle d'un serveur de calcul, dit serveur hôte courant, le véhicule émetteur d'une requête de service ayant une position appartenant à une zone géographique de couverture de communication cellulaire courante, ledit serveur hôte courant étant associé à la zone géographique de couverture courante, ledit serveur hôte courant comportant un processeur configuré pour mettre en oeuvre, pour une requête de service donnée reçue pendant un intervalle temporel courant faisant partie d'une succession d'intervalles temporels:
- un module de calcul, pour l'intervalle temporel courant, d'un vecteur de probabilités à K composantes, chaque composante étant associée à un instant temporel donné d'un ensemble de K instants temporels prédéterminé, chaque composante du vecteur de probabilités correspondant à une probabilité de migration à l'instant temporel associé, la migration consistant en au moins une réplication de la machine virtuelle exécutant ledit service sur un serveur hôte choisi appartenant à une zone géographique de couverture contiguë à ladite zone géographique de couverture courante, le calcul des composantes du vecteur de probabilités mettant en oeuvre un ensemble de K poids, chaque poids étant associé à un instant temporel de migration et représentatif d'un gain prédit pour une migration audit instant temporel de migration associé,
- un module de sélection dans ledit ensemble de K instants temporels d'un instant temporel, dit instant temporel de migration sélectionné, en fonction du vecteur de probabilités calculé, l'instant temporel de migration sélectionné ayant une probabilité de migration correspondante maximale dans le vecteur de probabilités calculé,
- un module détermination, pour la migration à l'instant temporel de migration sélectionné, d'un nombre de réplications de la machine virtuelle à effectuer à l'instant temporel de migration sélectionné pour minimiser un coût en énergie de réplication tout en assurant un niveau de continuité de service, et calcul d'un gain prédit pour ladite migration à l'instant temporel de migration sélectionné.

Selon un mode de réalisation, le système comporte en outre un module de mise à jour du poids associé à l'instant temporel de migration sélectionné, pour un intervalle temporel suivant, la mise à jour étant fonction dudit gain prédit.

Avantageusement, le système est configuré pour mettre en oeuvre un procédé d'exécution à distance de services requis par au moins un dispositif mobile, tel que brièvement décrit ci-dessus, selon tous les modes de réalisation envisagés.

Selon un autre aspect, l'invention concerne un programme d'ordinateur comportant des instructions logicielles qui, lorsqu'elles sont exécutées par un dispositif électronique programmable, mettent en oeuvre un procédé d'exécution à distance de services requis par au moins un dispositif mobile tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :
[Fig 1] la figure 1 représente schématiquement un réseau de communication cellulaire dans lequel l'invention est appliquée;
[Fig 2] la figure 2 est un schéma bloc d'un système d'exécution de services à distance ;
[Fig 3] la figure 3 est un synoptique des principales étapes d'un procédé d'exécution de services à distance selon un premier mode de réalisation ;
[Fig 4] la figure 4 illustre schématiquement un axe temporel d'application d'un procédé d'exécution à distance de services selon un mode de réalisation ;
[Fig 5] la figure 5 est un synoptique des principales étapes mises en oeuvre pour la détermination d'un nombre de réplications de la machine virtuelle à effectuer à un instant temporel sélectionné et le calcul d'un gain associé selon un mode de réalisation ;
[Fig 6] la figure 6 est un synoptique des principales étapes d'un procédé d'exécution de services à distance selon un deuxième mode de réalisation.

L'invention s'applique pour un dispositif mobile, par exemple un dispositif embarqué à bord d'un véhicule en mouvement ou un véhicule équipé de capacités de connexion à un réseau de communication, et c'est ce dernier cas d'application qui est décrit en détail ci-après.

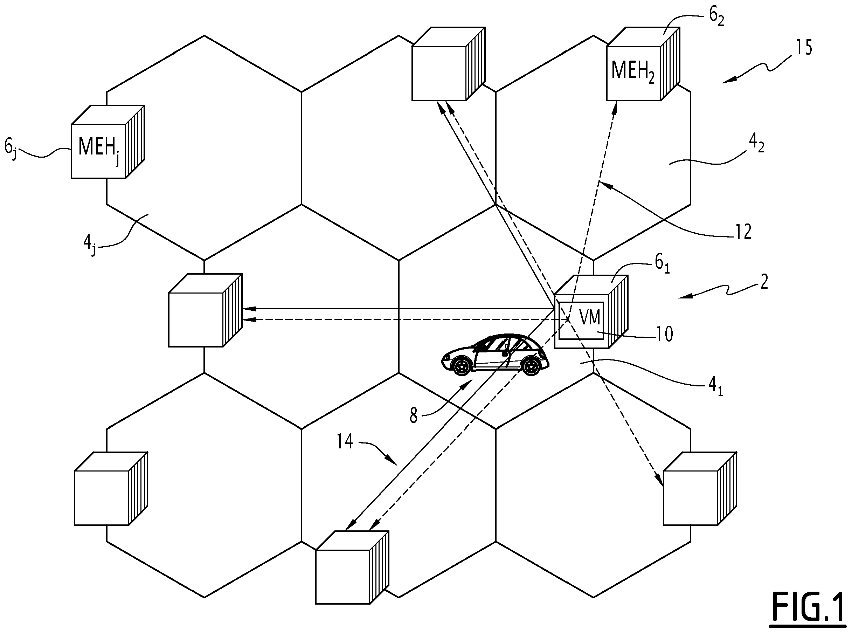

La **figure** 1 illustre schématiquement un ensemble de zones géographiques de couverture d'un réseau de communication cellulaire 2.

Les zones géographiques 4₁, 4₂,..., 4ⱼ sont représentées schématiquement.

Le réseau de communication 2 est un réseau de communication selon un protocole de communication radio au moins de quatrième génération, 4G ou de cinquième génération, 5G.

Chaque zone géographique correspond à une cellule du réseau de communication, et comprend des équipements (non représentés) de communication (points d'accès, stations de base etc).

De plus, chaque cellule comprend ou est associée à un serveur de calcul 6ᵢ, ou serveur hôte appelé MEHᵢ (pour « Mobile Edge Host »), qui est un serveur physique avec une capacité de calcul. Dans un MEC, plusieurs serveurs hôtes MEHs sont connectés, par une liaison filaire ou une liaison sans fil, pour gérer des services déportés (e.g. exécuter des machines virtuelles). Un MEH peut être placé soit dans une station de base (« colocated ») ou associé à plusieurs stations de base.

L'ensemble des serveurs de calcul 6ᵢ, adaptés pour communiquer entre eux, forme un « nuage de dispositifs de calcul » 15.

A la figure 1 on a représenté schématiquement un véhicule 8, par exemple un véhicule automobile, qui a des capacités de déplacement, et qui est équipé d'une interface de communication (non représentée à la figure 1) selon le protocole de communication 4G ou 5G.

L'invention s'applique plus généralement pour tout dispositif mobile, équipé d'une interface de communication 4G ou 5G et au-delà, susceptible de se déplacer entre les zones géographiques, par exemple un terminal, un téléphone mobile, une tablette, véhicules, etc.

Plus généralement, l'invention s'applique dans tout système qui utilise une communication sans fil entre un nœud et un ou plusieurs serveurs hôtes qui exécutent des services pour ce nœud, et présente un intérêt particulier pour tout nœud mobile pour lequel il y a une incertitude de position au moment d'un passage de relais (« handover » en anglais).

Bien entendu, l'invention s'applique à tout type de véhicule terrestre, mais également à d'autres types de véhicules comme par exemple des drones.

A un instant temporel courant, le véhicule 8 se situe à une position spatiale donnée, appartenant à une zone géographique de couverture courante, qui est la zone 4₁ dans l'exemple de la figure 1. Le véhicule 8 est alors capable d'échanger des données et de requérir une exécution d'un pour plusieurs services auprès du serveur hôte 6₁ associé à la zone 4₁, qui est le serveur hôte MEH₁, également appelé serveur hôte courant MEH_{c}.

L'exécution d'un service est effectuée par une machine virtuelle ou VM 10.

On entend ici par machine virtuelle une unité logicielle de calcul qui virtualise (ou émule) un système de calcul, dans divers types d'implémentation connus, sous forme de container ou autre, par exemple: Docker (logiciel libre permettant de lancer des applications dans des conteneurs logiciels), Solaris Containers, OpenVZ, Linux-VServer, LXC, AIX Workload Partitions, Parallels Virtuozzo Containers, iCore Virtual Accounts.

Le terme service désigne ici toute application logicielle mettant en oeuvre des échanges de données, par exemple, dans le cas des véhicules connectés, les services comprennent des services d'assistance à la conduite, la gestion du trafic routier et la fourniture de flux multimédia d'information ou de loisir (en anglais « infotainment »).

On peut distinguer plusieurs classes de service prédéfinies.

Le service ou application logicielle mis en oeuvre est du type à état (en anglais « stateful »). La réplication d'une machine virtuelle pour l'exécution d'un service consiste en la recopie complète d'une instance d'exécution du service, et d'un contexte d'exécution (variables, paramètres), ou état de l'instance d'exécution.

Lorsque le véhicule 8 est en mouvement, il est susceptible de quitter la zone géographique 4₁, pour une des zones adjacentes. Par hypothèse, la future zone géographique de couverture du véhicule considéré n'est pas connue.

Pour une continuité de l'exécution des services, il est prévu de répliquer la machine virtuelle VM 10 vers un ou plusieurs des serveurs hôtes 6ᵢ associés aux zones géographiques de couverture 4ᵢ adjacentes (ou contigües) à la zone courante.

Le serveur hôte courant MEHc initie une migration consistant à répliquer la VM 10 sur un ou plusieurs serveurs hôtes 6ᵢ, ce qui est représenté schématiquement par des flèches à la figure 1.

A cet effet, le serveur hôte met en oeuvre un procédé qui sera décrit plus en détail ci-après, qui permet de déterminer, pour chaque requête de service en provenance d'un véhicule, quand (i.e. à quel instant temporel), combien de réplications effectuer et vers quel(s) serveur(s) hôte(s), en fonction d'un gain dépendant de l'énergie de réplication, et fonction d'un niveau de continuité de service choisi, prenant en compte une métrique de risque associée à l'accessibilité du ou des serveurs hôtes choisis (risque associé à une probabilité que le véhicule en déplacement entre dans une zone de couverture associé à chaque serveur hôte choisi) et une métrique de disponibilité des réplications de VM.

Par exemple, un niveau de continuité de service est défini par une valeur de la métrique de risque et une valeur de la métrique de disponibilité, ce qui permet d'assurer que ces métriques sont respectées dans ce cadre.

A la figure 1 on a représenté schématiquement deux migrations par des flèches partant du serveur hôte MEH_{c} : un premier ensemble de flèches 12 (en traits pointillés) représentatives d'une première migration, à un instant temporel T₁, correspondant à cinq réplications dans cet exemple ; un deuxième ensemble de flèches 14 (en traits pleins) représentatives d'une deuxième migration, à un instant temporel T₂, ultérieur à T₁, correspondant à trois réplications dans cet exemple. Les instants temporels T₁, T₂ sont tous deux des instants futurs par rapport à l'instant courant où le véhicule se trouve dans la position représentée. On comprend qu'entre l'instant temporel T₁ et l'instant temporel T₂, le véhicule se sera déplacé, et le nombre de serveurs hôtes disponibles sera plus faible.

Avantageusement, le procédé proposé permet d'assurer un niveau de continuité de service lorsque le véhicule 8 change de zone géographique de couverture réseau, notamment dans le cas d'une mobilité rapide du véhicule 8, pour des services sensibles aux délais de transmission (en anglais « delay sensitive applications »).

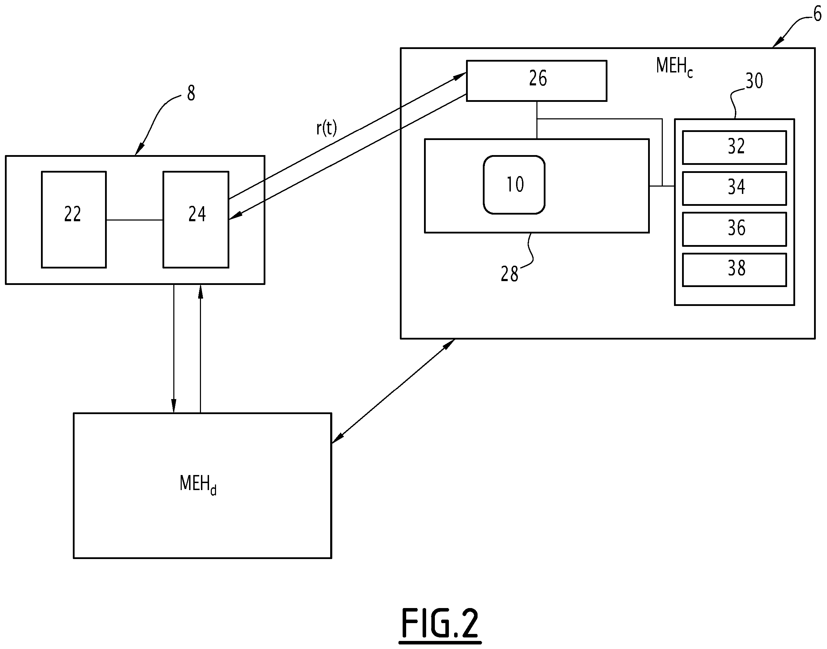

La **figure 2** est un synoptique des blocs fonctionnels d'un système d'exécution de services à distance selon l'invention.

Le système 20 comprend un véhicule 8 et une pluralité de serveurs hôtes MEH_{c}, MED_{d}, adaptés à communiquer entre eux, et formant un MEC.

Il est entendu que le système représenté à la figure 2 est simplifié, le nombre de serveurs hôtes étant quelconque. De plus en pratique un serveur hôte courant est adapté pour recevoir des requêtes de service en provenance d'une pluralité de véhicules.

Les blocs fonctionnels d'un serveur hôte 6 (MEH_{c}) sont représentés en détail, ce serveur hôte étant un serveur hôte courant MEH_{c} configuré pour mettre en oeuvre le procédé d'exécution à distance de services.

Le véhicule 8 comprend une unité de contrôle électronique (ECU) de bord 22 et une interface de communication 24 selon le protocole de communication cellulaire choisi, par exemple le protocole 5G.

L'unité ECU 22 est un dispositif de calcul électronique, par exemple un ordinateur de bord, comportant notamment un processeur de calcul, et une mémoire électronique.

L'unité ECU 22 est adaptée pour communiquer avec l'interface de communication 24 via un bus de communication bidirectionnelle, pour l'échange de données, commandes, requêtes, réponses. En particulier, l'ECU 22 est adaptée pour émettre des requêtes de services à destination d'un serveur hôte MEH_{c}, par exemple une requête r(t) émise pendant un intervalle temporel t.

Chaque serveur hôte MEH 6 comporte également une interface de communication 26, selon le protocole de communication cellulaire choisi, par exemple le protocole 5G.

Le serveur hôte 6 est un dispositif électronique programmable, qui comprend en outre une unité de calcul 28 comprenant un ou plusieurs processeur(s) de calcul et une unité de mémoire électronique 30. L'interface de communication 26, l'unité de calcul 28 et l'unité de mémoire électronique 30 sont adaptées pour communiquer via un bus de communication.

L'unité de calcul 28 met en oeuvre une VM 10 pour l'exécution de la requête r(t), émise par un véhicule pour l'exécution d'un service.

En outre, l'unité de calcul 28 est configurée pour mettre en oeuvre, pour chaque requête et pour des intervalles temporels successifs :
- un module 32 de calcul d'un vecteur de probabilités à K composantes, chaque composante étant associée à un instant temporel donné d'un ensemble de K instants temporels prédéterminé, chaque composante du vecteur de probabilités correspondant à une probabilité de migration à l'instant temporel associé, la migration consistant en au moins une réplication de la machine virtuelle exécutant le service sur un serveur de calcul hôte appartenant à une zone géographique de couverture contiguë à ladite zone géographique de couverture courante, la probabilité étant calculée en fonction d'un poids fonction de l'instant temporel associé ;
- un module 34 de sélection d'un instant temporel, dit instant temporel de migration sélectionné, en fonction du vecteur de probabilités calculé,
- un module 36 de détermination, pour la migration à l'instant temporel de migration sélectionné, d'un nombre de réplications de la machine virtuelle à effectuer à l'instant temporel sélectionné pour minimiser un coût en énergie de réplication tout en assurant un niveau de continuité de service, et calcul d'un gain associé à ladite migration à l'instant temporel de migration sélectionné, et
- un module 38 de mise à jour du poids associé à l'instant temporel sélectionné en fonction du gain calculé.

Dans un mode de réalisation, les modules 32, 34, 36, 38 sont réalisés chacun sous forme d'un logiciel, ou d'une brique logicielle exécutable par l'unité de calcul 28 et mémorisés dans la mémoire 30. Ils forment alors un programme d'ordinateur comportant des instructions logicielles qui lorsqu'elles sont exécutées par un dispositif électronique programmable, mettent en oeuvre un procédé d'exécution à distance de services requis par un dispositif mobile. Ce programme d'ordinateur est apte à être enregistré sur tout support d'enregistrement non volatile lisible par ordinateur, par exemple tout type de mémoire non volatile (EPROM, EEPROM, FLASH, NVRAM), une carte magnétique ou une carte optique.

En variante non représentée, les modules 32, 34, 36, 38 sont réalisés chacun sous forme d'un composant logique programmable, tel qu'un FPGA (de l'anglais *Field Programmable Gate Array*)*,* un GPU (processeur graphique) ou un GPGPU (de l'anglais *General-purpose processing on graphics processing*), ou encore sous forme d'un circuit intégré dédié, tel qu'un ASIC (de l'anglais *Application Specific Integrated Circuit*).

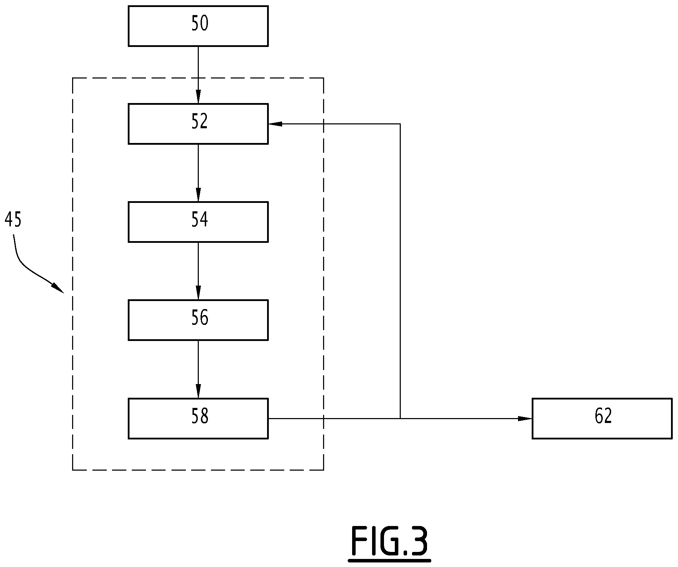

La **figure** 3 est un synoptique des principales étapes d'un procédé d'exécution de services à distance selon un premier mode de réalisation, mises en oeuvre par une unité de calcul d'un serveur hôte courant.

Le procédé est décrit ci-après dans le cas de la réception d'une requête d'exécution de service en provenance d'un véhicule, mais s'applique de manière analogue pour chaque requête reçue par le serveur hôte courant, en provenance d'un même véhicule ou de plusieurs véhicules.

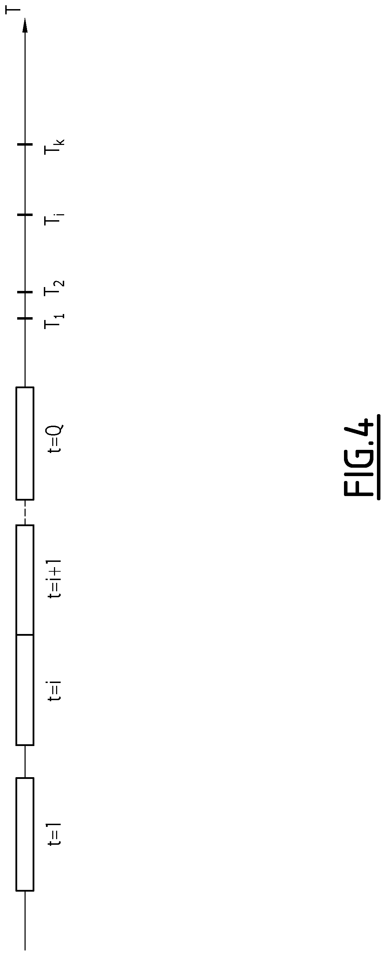

Le procédé débute dans un premier intervalle temporel t=1 (t représente ici un numéro d'intervalle temporel dans une succession d'intervalles temporels), et est exécuté sur plusieurs intervalles temporels successifs, comme illustré schématiquement à la **figure 4****,** par exemple Q intervalles temporels, Q étant un entier donné.

La durée de chaque intervalle temporel est choisie, par exemple elle est fixée ou est variable en fonction d'un nombre de requêtes à accumuler avant de commencer l'exécution. Ce nombre de requêtes est supérieur ou égale à 1, et par exemple compris entre 2 et 100. Ces requêtes sont reçues par le serveur hôte courant en provenance d'un ou plusieurs véhicules.

Dans un mode de réalisation, les requêtes traitées sont les requêtes de services susceptibles d'être migrés, par exemple en provenance de véhicules situés à une distance inférieure à une distance seuil d'un bord de la zone de couverture.

Le procédé comprend une étape de réception de requête de service r(t) et d'initialisation des paramètres pour l'intervalle temporel t courant, qui est l'intervalle t=1.

Le procédé a pour but de déterminer un instant temporel de déclenchement de la migration, appelé simplement instant temporel de migration par la suite, pour exécuter la ou chaque requête de service reçue, parmi un ensemble de K instants temporels prédéterminé : {T₁,.., Tᵢ,...T_{K}}.

Dans la suite, le procédé de la figure 3 est décrit pour le traitement d'une requête de service en provenance d'un véhicule.

Un exemple d'instants temporels T₁,...,Tᵢ,...T_{K} est illustré sur l'axe temporel représenté à la figure 4 : les instants temporels sont ordonnés dans l'ordre croissant des indices, l'instant Tᵢ₊₁ étant ultérieur à l'instant Tᵢ.

Dans un mode de réalisation, l'ensemble de K instants temporels est déterminé en fonction d'un nombre de serveur hôtes voisins (i.e. associés à des zones géographiques de couverture contiguës à la zone géographique courante dans laquelle se situe le véhicule émetteur de la requête) candidats pour la migration à chaque instant temporel Tₖ.

Ainsi, ${N}_{MEH}^{k}$ représente le nombre de serveurs hôtes MEH voisins candidats lorsque la migration est initiée à l'instant temporel *Tₖ*. Les instants temporels sont choisis de manière à ce que les nombres de serveurs hôtes candidats associés soient différents, par exemple décroissants, dans l'ordre des indices croissants, ${N}_{MEH}^{1} > {N}_{MEH}^{2} > ⋯ > {N}_{MEH}^{K}$, jusqu'à ${N}_{MEH}^{K} = 1$.

Le nombre K est un nombre entier quelconque, dépendant de la topologie du réseau de communication, par exemple un nombre entier supérieur ou égal à 2.

A chaque instant temporel *Tₖ* est associée une option *θₖ*(*t*) représentative de la sélection ou non, à l'intervalle temporel t, de la migration de la VM à l'instant *Tₖ*. En d'autres termes :
*θₖ*(*t*) *=* 1 si l'instant temporel *Tₖ* est sélectionné comme instant d'initiation de la migration lors de l'exécution du procédé à l'intervalle temporel t ; et *θₖ*(*t*) = 0 sinon.

Le procédé met en oeuvre un algorithme d'optimisation probabiliste du type « exploiter ou explorer » (en anglais « exploit or explore »), sur une succession d'intervalles temporels.

Des valeurs initiales de poids associés aux instants temporels, *ωᵤ*(*t*)*,* ainsi qu'une valeur initiale de paramètre ρ de pondération, compris entre 0 et 1 et représentatif d'une pondération entre les options « exploiter » ou « explorer », sont obtenues à l'étape d'initialisation 50. Ces valeurs initiales sont par exemple fournies par un opérateur, ou lues dans une mémoire, ou encore sont fixées par défaut.

Par exemple, dans un mode de réalisation, le paramètre ρ de pondération prend une valeur fournie par la formule : $ρ = min \left\{1, \sqrt{\frac{Kln \left(K\right)}{\left(e-1\right) {g}_{b}}}\right\}$

Où g_{b} est une valeur donnée, représentative d'une borne supérieure du gain total, défini par la formule suivante en fonction d'un gain xₖ(t) défini plus loin : ${g}_{b} = {max}_{1 \leq k \leq K} {\sum }_{t = 1}^{T} {x}_{k} \left(t\right)$

Chaque poids *ωₖ*(*t*)*,* associé à l'instant temporel Tₖ, est calculé en fonction d'un gain prédit pour une migration audit instant temporel associé Tₖ.

Le procédé comprend une étape 52 de calcul d'un premier vecteur de probabilités *P*(*t*) à K composantes, chaque composante *pₖ*(*t*) étant une valeur de probabilité de migration de la VM à l'instant temporel Tₖ calculée pour l'intervalle temporel t : ${p}_{k} \left(t\right) = \left(1-ρ\right) \frac{{ω}_{k} \left(t\right)}{{\sum }_{j = 1}^{K} {ω}_{j} \left(t\right)} + \frac{ρ}{K} pour tout k ∈ \left\{1,2,…, K\right\}$

Ainsi pour chaque instant temporel Tₖ, la probabilité de migration calculée est une somme entre un premier terme dépendant des valeurs de poids associés à chaque instant temporel, représentatifs d'un gain prédit empiriquement, et d'un deuxième terme de distribution uniforme.

Le procédé comprend ensuite une étape 54 de sélection d'un instant temporel T_{k*}, dit instant temporel de migration sélectionné, en fonction du premier vecteur de probabilités calculé. L'instant temporel sélectionné est celui qui maximise la probabilité *pₖ*(*t*) : $k * = {Argmax}_{j = 1 … K} \left({p}_{j}\left(t\right)\right)$

L'option *θ_{k*}*(*t*) est activée, c'est-à-dire mise à 1, les autres valeurs de *θⱼ*(*t*) étant à 0.

Dans le cas particulier où plusieurs instants de migration ont une même probabilité égale à la valeur maximale parmi les probabilités *pₖ*(*t*)*,* il est possible d'utiliser toute métrique pour finaliser la sélection d'un instant temporel, par exemple un tirage au sort entre les scénarios de même probabilité de migration, ou la sélection du premier résultat obtenu avec cette probabilité maximale.

Le procédé comprend ensuite une étape 56 de détermination, pour la migration à l'instant temporel de migration sélectionné T_{k*}, d'un nombre de réplications de la machine virtuelle à effectuer à partir de l'instant temporel sélectionné pour minimiser un coût en énergie de réplication tout en assurant un niveau de continuité de service, et de calcul d'un gain prédit pour ladite migration à l'instant temporel de migration sélectionné. En plus du nombre de réplications, les serveurs hôtes à utiliser pour ces réplications sont également déterminés.

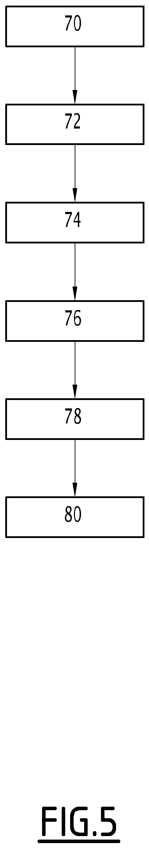

Une mise en oeuvre de cette étape 56 de détermination sera détaillée ci-après en référence à la figure 5. Avantageusement, un algorithme basé sur une optimisation de Lyapunov est mis en oeuvre.

Le gain prédit à l'intervalle temporel t pour la migration à l'instant temporel T_{k*} de l'ensemble des requêtes reçues à t est noté *x_{k*}*(*t*)

Le procédé comprend en outre une étape 58 de mise à jour du poids associé à l'instant temporel T_{k*} pour l'intervalle temporel suivant t+1. ${ω}_{k ∗} \left(t+1\right) = {ω}_{k ∗} \left(t\right) {e}^{\frac{{ρx}_{k *} \left(t\right)}{{Kp}_{k ∗} \left(t\right)}}$

Pour les valeurs d'indice k différent de k*, les valeurs de poids sont inchangées : ${ω}_{k} \left(t+1\right) = {ω}_{k} \left(t\right) , ∀ k \neq k *$

Dans un mode de réalisation, la mise à jour des poids est effectuée pour l'ensemble des requêtes reçues durant l'intervalle temporel courant, et qui appartiennent à la même classe de service, les classes de services étant prédéfinies.

L'étape 58 est suivie d'une étape 62 de mémorisation, pour la ou pour chaque requête considérée, de la décision de migration *θ_{k*}*(*t*)*,* précisant l'instant T_{k*} sélectionné pour la migration, ainsi que le nombre ${M}_{r}^{k *} \left(t\right)$ de réplications à effectuer déterminé à l'étape 56. Les serveurs hôtes des réplications sont ${M}_{r}^{k *} \left(t\right)$ serveurs hôtes sélectionnés à l'étape 56, en fonction d'une probabilité représentative d'une prédiction de mobilité associée, représentative de la probabilité que le véhicule se déplace dans une zone de couverture à laquelle un serveur hôte sélectionné est associé.

Un déclenchement effectif de la migration par réplication(s) de la VM à l'instant temporel T_{k*} sera effectué ultérieurement en fonction des informations mémorisées (nombre de réplications, serveurs hôte de réplication).

Les étapes 50 à 58 sont itérées pour l'intervalle temporel suivant t+1 pour une ou plusieurs nouvelles requêtes, en provenance du même ou d'autres véhicules.

L'algorithme décrit ci-dessus en référence à la figure 3 est un algorithme de décision basé sur l'algorithme connu sous le nom EXP3 (« Exponential weight algorithm for Exploration and Exploitation »), qui met en oeuvre avantageusement une détermination de gain associé au déclenchement de la migration à l'instant temporel T_{k*}. Le calcul du gain sera détaillé ci-après. Ce calcul repose sur une minimisation de l'énergie de réplication pour un nombre ${M}_{r}^{k *} \left(t\right)$ de réplications à effectuer lors de la migration à l'instant temporel T_{k*}, et le respect d'une contrainte de risque (risque de perte de la continuité de service) et d'une contrainte de disponibilité de la VM (réplication complète au moment où le véhicule change de zone géographique de couverture).

La **figure 5** est un synoptique des principales étapes mises en oeuvre pour la détermination d'un nombre de réplications de la machine virtuelle à effectuer à un instant temporel sélectionné, pour une ou chaque requête, et le calcul d'un gain associé selon un mode de réalisation.

Dans ce mode de mise en œuvre, une optimisation de Lyapunov est mise en œuvre.

Le procédé de détermination d'un nombre de réplications est mis en œuvre pour un intervalle temporel t, et pour une pluralité de requêtes r d'exécution, en provenance d'un ou plusieurs véhicules, reçues pendant l'intervalle temporel t.

Ce procédé s'applique de manière analogue pour le traitement de chaque requête.

Le procédé comprend une étape 70 de calcul de l'énergie consommée pour la migration, pour l'ensemble des requêtes considérées pendant l'intervalle temporel t.

L'énergie consommée lors de la migration de la VM qui traite d'une requête, pour un nombre ${M}_{r}^{k} \left(t\right)$ de réplications, est calculée, dans un mode de réalisation, par la formule suivante : ${E}_{r} \left(t\right) = {M}_{r}^{k} \left(t\right) {ψ}_{r}$

Où ${M}_{r}^{k} \left(t\right)$ est le nombre de réplications effectué quand la migration est déclenchée à l'instant *Tₖ,* et *ψᵣ* l'énergie consommée pour une réplication de la VM qui traite la requête r.

Par exemple, dans un mode de réalisation, l'énergie consommée par réplication d'une VM est calculée selon la formule : ${ψ}_{r} = 3600 \times \left(0,512W+20,165\right) \left[Joules\right]$

Où W : La taille de la VM à migrer en méga octets.

Ainsi, dans ce mode de réalisation, l'énergie consommée par réplication de la VM est fonction de la taille de la VM à migrer.

Bien entendu, des variantes de calcul de l'énergie consommée par réplication d'une VM sont envisageables. Par exemple, dans une variante, l'énergie consommée calculée dépend également de l'instant de migration.

Pour un ensemble de requêtes A(t), l'énergie totale consommée pour la migration est, pour l'ensemble des instants temporels Tₖ considérés : ${\sum }_{r ∈ A \left(t\right)} {\sum }_{k = 1}^{K} {M}_{r}^{k} \left(t\right) {ψ}_{r} {θ}_{k} \left(t\right)$

L'ensemble de requêtes A(t) comporte N(t) requêtes.

Ensuite, un risque moyen est calculé lors d'une étape de calcul de risque moyen 72, selon une métrique de risque.

La métrique de risque est associée à la probabilité, dite probabilité spatiale, pour chaque serveur hôte, que le véhicule émetteur d'une requête entre dans la zone de couverture à laquelle ce serveur hôte est associé après avoir quitté la zone de couverture courante. En d'autres termes, la métrique de risque est associée à l'accessibilité des serveurs hôtes pour le véhicule émetteur de la requête lors de son déplacement.

Un vecteur de prédiction de mobilité, qui est un deuxième vecteur de probabilité spatiale est associé à chaque requête *r* ∈ *A*(*t*)*,* noté ${P}_{r , k}^{s} \left(t\right) = \left({p}_{r , k , 1}^{S}\left(t\right)\right.$, $\left.{p}_{r , k , 2}^{S}\left(t\right),…,{p}_{r , k , {N}_{MEH}}^{S}\left(t\right)\right)$. Ce vecteur comporte *N_{MEH}* composantes, chaque composante ${p}_{r , k , i}^{S} \left(t\right)$ représentant la probabilité que le véhicule émetteur de la requête r(t) se connecte au serveur hôte MEHᵢ suite à une migration à l'instant temporel Tₖ. Les composantes du vecteur sont organisées dans l'ordre décroissant de probabilité : ${p}_{r , k , 1}^{S} \left(t\right) \geq {p}_{r , k , 2}^{S} \left(t\right) \geq ⋯ \geq$ ${p}_{r , k , {N}_{MEH}}^{S} \left(t\right)$

Pour un instant temporel de migration T_{k*} choisi, la métrique de risque s'écrit : $Risque \left(r\left(t\right),k*,{M}_{r}^{k *}\left(t\right)\right) = 1 - {\sum }_{i - 1}^{{M}_{r}^{k *} \left(t\right)} {p}_{r , k * , i}^{s} \left(t\right)$

Le risque moyen est alors calculé selon la formule : $\overline{ζ \left(t\right)} = \frac{1}{N \left(t\right)} {\sum }_{r ∈ A \left(t\right)} {\sum }_{k = 1}^{K} \left(1-{\sum }_{i = 1}^{{M}_{r}^{k} \left(t\right)} {p}_{r , k , i}^{s} \left(t\right)\right) {θ}_{k} \left(t\right)$

Le risque moyen est calculé pour l'ensemble des requêtes traitées dans l'intervalle temporel t.

L'étape 72 de calcul de risque moyen est suivie d'une étape 74 de calcul de disponibilité moyenne selon une métrique de disponibilité, représentative de la disponibilité de la VM suite à une réplication, en d'autres termes de possibilité d'effectuer une migration complète de la VM avant le changement de serveur hôte.

Pour une requête donnée, et pour un instant temporel de migration, la durée de réplication de la VM ${T}_{r}^{Mig}$ vers un serveur hôte MEHᵢ est calculée.

Dans un mode de réalisation, la durée de réplication dépend d'une classe de service, par exemple parmi les classes de services suivantes : serveur de jeu, logiciel consommateur de mémoire RAM (en anglais, « high RAM app »), streaming vidéo, détection de visages. Bien entendu la liste n'est pas exhaustive. Par exemple pour ces types de services, la durée de réplication estimée varie entre 2 secondes et 15,5 secondes dans le cas où la VM est de type container.

Le temps restant avant le changement de serveur hôte ${T}_{r , k}^{Rem}$ est estimé, en fonction de données de contexte (évaluation de la vitesse de déplacement du véhicule, topologie du réseau).

Pour un instant temporel de migration T_{k*} choisi, la métrique de disponibilité est par exemple la fonction indicatrice notée $Ind \left(\left\{{T}_{r , k *}^{Rem}\geq {T}_{r}^{Mig}\right\}\right)$*,* qui est égale à 1 si l'inégalité est vérifiée, et égale à 0 sinon.

La disponibilité moyenne pour l'ensemble des requêtes traitées pendant l'intervalle temporel t s'écrit alors : $\overline{Γ \left(t\right)} = \frac{1}{N \left(t\right)} {\sum }_{r ∈ A \left(t\right)} {\sum }_{k = 1}^{K} Ind \left(\left\{{T}_{r , k}^{Rem}\geq {T}_{r}^{Mig}\right\}\right) {θ}_{k} \left(t\right)$

Bien entendu les étapes 72 de calcul de risque moyen et 74 de calcul de disponibilité moyenne peuvent être effectuées dans un ordre différent ou en parallèle.

Une étape 76 de construction de queues virtuelles de Lyapunov met en œuvre les valeurs de risque moyen et de disponibilité moyenne calculées précédemment, selon les formules suivantes : $Z \left(t+1\right) = max \left\{0,Z\left(t\right)+\overline{ζ \left(t\right)}-ε\right\}$ Et $Y \left(t+1\right) = max \left\{0,Y\left(t\right)+γ-\overline{Γ \left(t\right)}\right\}$

Les paramètres respectifs *ε* et *γ* sont de paramètres de contrôle liés au niveau de continuité de service recherché, ou en d'autres termes, à la qualité de service souhaitée.

En effet, la première queue virtuelle (Z(t)) associée au risque est incrémentée quand le risque moyen calculé dépasse le paramètre de contrôle associé ε.

De manière analogue, la deuxième queue virtuelle (Y(t)) associée à la disponibilité est incrémentée si la disponibilité moyenne calculée est inférieure au paramètre de contrôle associé γ.

Une optimisation de type « dérive plus pénalité » (en anglais « drift plus penalty ») est appliquée (étape 78) selon le procédé d'optimisation de Lyapunov, connu dans le domaine des systèmes stochastiques.

Pour l'instant temporel de migration T_{k*}, θ_{k*}(t) est connu.

Lors de cette étape, le nombre ${M}_{r}^{{k}^{∗}} \left(t\right)$ optimal pour chaque requête est déterminé à partir la fonction « objectif » xₖ(t) (étant donné que *T_{k*}* a été choisi comme instant optimal pour le déclenchement de la migration).

La fonction « objectif » pour l'instant T_{k*} est donnée par la formule suivante : ${x}_{{k}^{∗}} \left(t\right) = {\sum }_{r ∈ A \left(t\right)} V {M}_{r}^{{k}^{∗}} \left(t\right) {ψ}_{r} + \frac{Z \left(t\right)}{N \left(t\right)} \left(t-{\sum }_{i = 1}^{{M}_{r}^{{k}^{∗}} \left(t\right)} {p}_{r , k , i}^{s} \left(t\right)\right) - \frac{Y \left(t\right)}{N \left(t\right)} ind \left\{{T}_{r , k}^{Rem}\left(t\right)\geq {T}_{r}^{Mig}\right\}$ *x_{k*}*(*t*) se décompose naturellement suivant r.

Afin de déterminer la valeur optimale de ${M}_{r}^{{k}^{∗}} \left(t\right)$ pour chaque requête r, chaque terme $V {M}_{r}^{{k}^{∗}} \left(t\right) {ψ}_{r} + \frac{Z \left(t\right)}{N \left(t\right)} \left(1-{\sum }_{i = 1}^{{M}_{r}^{{k}^{∗}} \left(t\right)} {p}_{r , k , i}^{s} \left(t\right)\right) - \frac{Y \left(t\right)}{N \left(t\right)} ind \left\{{T}_{r , k}^{Rem}\left(t\right)\geq {T}_{r}^{Mig}\right\}$ est minimisé individuellement.

Ainsi : ${M}_{r}^{{k}^{∗}} {\left(t\right)}^{∗} = {argmin}_{{M}_{r}^{{k}^{∗}} \left(t\right) ∈ {N}_{MEH}^{{k}^{∗}}} \left[{VM}_{r}^{{k}^{∗}}\left(t\right){ψ}_{r}+\frac{Z \left(t\right)}{N \left(t\right)}\left(1-{\sum }_{i = 1}^{{M}_{r}^{{k}^{∗}} \left(t\right)} {p}_{r , {k}^{∗} , i}^{s} \left(t\right)\right)-\frac{Y \left(t\right)}{N \left(t\right)}Ind\left(\left\{\begin{matrix}{T}_{r , k}^{Rem} \geq \\ {T}_{r}^{Mig}\end{matrix}\right\}\right)\right]$

Où la valeur V est un coefficient de prise en compte de l'énergie consommée.

Alors, dans le cas général, l'optimisation de Lyapunov consiste à déterminer un nombre ${M}_{r}^{k *} \left(t\right)$ de réplication à effectuer, le nombre ${M}_{r}^{k *} \left(t\right)$ étant inférieur ou égal au nombre ${N}_{MEH}^{k *}$ de serveurs hôtes candidats associés à l'instant T_{k*}.

Dans un mode de réalisation, une recherche exhaustive est appliquée, toutes les valeurs de ${M}_{r}^{k *} \left(t\right)$ comprises entre 1 et ${N}_{MEH}^{k}$ sont testées, et la valeur ${M}_{r}^{k *} \left(t\right) *$ qui minimise ${VM}_{r}^{k *} \left(t\right) {ψ}_{r} + \frac{Z \left(t\right)}{N \left(t\right)} \left(1-{\sum }_{i = 1}^{{M}_{r}^{k *} \left(t\right)} {p}_{r , k * , i}^{s} \left(t\right)\right) - \frac{Y \left(t\right)}{N \left(t\right)} Ind \left(\left\{{T}_{r , k *}^{Rem}\geq {T}_{r}^{Mig}\right\}\right)$ est retenue, *x_{k*}*(*t*) est obtenue en sommant les termes ${VM}_{r}^{k *} \left(t\right) * {ψ}_{r} + \frac{Z \left(t\right)}{N \left(t\right)} \left(1-{\sum }_{i = 1}^{{M}_{r}^{k *} \left(t\right) *} {p}_{r , k * , i}^{s} \left(t\right)\right) - \frac{Y \left(t\right)}{N \left(t\right)} Ind \left(\left\{{T}_{r , k *}^{Rem}\geq {T}_{r}^{Mig}\right\}\right)$

Après avoir déterminé les ${M}_{r}^{k *} \left(t\right) *$ qui minimise la fonction « objectif », le gain prédit est calculé à l'étape de calcul de gain 80, ce gain étant égal à la valeur de la fonction « objectif » *, x_{k*}*(*t*)*.* pour T_{k*} et pour le nombre de réplications déterminé.

Ce gain prédit minimise l'énergie de réplication pour effectuer le nombre de réplications ${M}_{r}^{k *} \left(t\right) *$ sous la contrainte du respect du niveau de qualité de service en ce qui concerne le risque de migration vers un serveur hôte qui ne sera pas sollicité et la disponibilité de la VM après réplication.

En pratique, ${M}_{r}^{{k}^{∗}} {\left(t\right)}^{∗}$ réplications seront déclenchées à l'instant de migration Tk* choisi, vers les ${M}_{r}^{{k}^{∗}} {\left(t\right)}^{∗}$ serveurs hôtes ayant les probabilités représentatives de prédiction de mobilités associées les plus élevées dans le vecteur de prédiction de mobilité ${P}_{r , {k}^{∗}}^{s} \left(t\right)$.

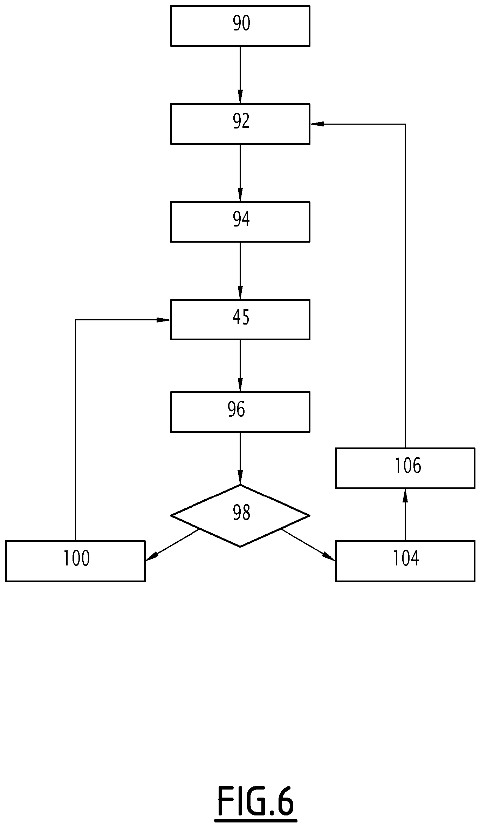

La **figure 6** est un synoptique des principales étapes d'un procédé d'exécution de services à distance selon un deuxième mode de réalisation, mises en oeuvre par une unité de calcul d'un serveur hôte courant. Dans ce deuxième mode de réalisation, le paramètre ρ de pondération, utilisé dans la formule [MATH 2] de calcul du premier vecteur de probabilité, est déterminé par l'algorithme connu sous le nom de « doubling trick ».

A la différence du premier mode de réalisation, dans ce mode de réalisation le paramètre ρ de pondération a une valeur qui évolue dynamiquement, de manière à assurer une convergence de l'algorithme mis en oeuvre.

Le procédé comprend une étape 90 d'initialisation, lors de laquelle un paramètre C est initialisé à la valeur : $C = \frac{Kln \left(K\right)}{e - 1}$

Une variable *l* est mise à zéro, *l* désignant un indice de période pendant laquelle la valeur du paramètre ρ de pondération est constante.

De plus, l'indice d'intervalle temporel est initialisé à 1, et un ensemble des valeurs de gain global cumulé pour chaque indice d'instant temporel Tₖ est mis à 0 : ${G}_{k} \left(t=1\right) = 0 , ∀ k$

Le procédé comprend une étape 92 de calcul d'une valeur gₗ de borne de gain pour la période d'indice *l* : ${g}_{l} = C \times {4}^{l}$

A l'initialisation, *l* = 0 comme indiqué ci-dessus.

Le procédé comprend également une étape 94 de calcul de la valeur du paramètre ρ de pondération en fonction de l'indice l : $ρ = {2}^{- l}$

Ensuite l'algorithme EXP3 est mis en œuvre (étape 45, comprenant les étapes 52 à 58 décrites précédemment en référence à la figure 3) pour l'intervalle temporel t, avec la valeur du paramètre ρ de pondération calculée à l'étape 94. Un instant temporel de migration T_{k*} est alors obtenu, et un gain prédit associé *x_{k*}*(*t*)*.*

Lors d'une étape 96 de mise à jour, le gain global cumulé étant incrémenté pour l'indice k* correspondant à l'instant temporel de migration T_{k*} sélectionné : ${G}_{{k}^{∗}} \left(t+1\right) = {G}_{{k}^{∗}} \left(t\right) + {x}_{{k}^{∗}} \left(t\right)$

Où *x_{k*}*(*t*) est le gain prédit calculé.
Pour les autres valeurs de k, le gain global cumulé est inchangé : *Gₖ*(*t +* 1) *= Gₖ*(*t*)

Ensuite il est vérifié à l'étape de vérification 98 si la valeur maximale de gain global cumulé pour l'intervalle temporel t respecte la condition suivante : ${max}_{k} {G}_{k} \left(t\right) \leq {g}_{l} - \frac{K}{ρ}$

Le gain global cumulé maximal est comparé à un seuil qui dépend du nombre K d'instants temporels, ainsi que de la valeur ρ de pondération courante.

Si le gain global cumulé est inférieur au seuil, l'indice d'intervalle temporel est incrémenté à l'étape d'incrémentation 100 (*t* ← *t +* 1 ), et l'étape 45 de mise en oeuvre de l'algorithme EXP3 pour l'intervalle t+1 est exécutée, avec la même valeur de paramètre ρ de pondération que précédemment.

Si la condition vérifiée à l'étape de vérification 98 n'est pas respectée, i.e. si le gain global cumulé est supérieur au seuil $\left({max}_{k}{G}_{k}\left(t\right)>{g}_{l}-\frac{K}{ρ}\right)$, alors l'étape 98 est suivie d'une étape 104 d'incrémentation de l'indice *l* désignant la période pendant laquelle la valeur du paramètre ρ de pondération est constante *l* ← *l +* 1, et d'une mise à jour des valeurs du paramètre de pondération et de la borne de gain gₗ.

De manière analogue à l'étape 100, l'indice d'intervalle temporel est incrémenté à l'étape 106.

L'étape 106 est suivie de l'étape de 92 de calcul d'une valeur gₗ de borne de gain pour la période d'indice *l* (pour la nouvelle valeur d'indice *l*)*,* puis de l'étape 94 de calcul d'une valeur du paramètre ρ de pondération en fonction de l'indice *l*. L'étape 45 de mise en oeuvre de l'algorithme EXP3 pour l'intervalle t+1 est exécutée, avec la valeur du paramètre ρ de pondération calculée.

Selon des variantes de mises en oeuvre, dans le procédé de l'invention, l'énergie consommée pour la migration dépend d'autres paramètres, par exemple de l'instant de migration.

Avantageusement, le choix de l'instant temporel de migration pour chaque requête est optimisé en fonction d'une somme de gains associés à des migrations de précédentes requêtes sur une succession d'instants temporels.

Avantageusement, le gain prédit pour chaque requête, pour l'instant temporel de migration sélectionné et le nombre de réplications déterminé, dépend de l'énergie consommée pour effectuer les réplications, de la métrique de risque et d'une métrique de disponibilité, et de paramètres de contrôle associés à un niveau de continuité de service recherché. Ainsi, l'invention permet de définir plusieurs niveaux de continuité de service et de déterminer un instant temporel de migration pour un niveau de continuité de service choisi.

Avantageusement, pour chaque niveau de continuité de service, l'énergie de réplication est minimisée.

Avantageusement, le procédé proposé est exécutable sur une pluralité de requêtes, en provenance d'un ou plusieurs dispositifs mobiles, sur des intervalles temporels successifs, et pour chaque requête, les poids mis en œuvre dans le calcul des composantes du vecteur de probabilités associées aux instants temporels de migration sont mis à jour en fonction des gains prédits.

## Revendications

1. Procédé d'exécution à distance de services requis par au moins un dispositif mobile, notamment embarqué à bord d'un véhicule (8), via un réseau de communication cellulaire selon un protocole de communication au moins de quatrième génération, un service étant exécuté par une machine virtuelle (VM) d'un serveur de calcul (MEH_{c}), dit serveur hôte courant, le dispositif mobile émetteur d'une requête de service ayant une position appartenant à une zone géographique de couverture de communication cellulaire courante (4₁), ledit serveur hôte courant étant associé à la zone géographique de couverture courante,
le procédé étant **caractérisé en ce qu'**il comporte les étapes suivantes, mises en oeuvre par un processeur dudit serveur hôte courant (MEH_{c}), pour une requête de service donnée, reçue pendant un intervalle temporel courant:
- a) pour l'intervalle temporel courant (t), calcul (52) d'un vecteur de probabilités à K composantes, chaque composante étant associée à un instant temporel (Tₖ) donné d'un ensemble de K instants temporels (T₁,...Tᵢ,.., T_{K}) prédéterminé, chaque composante du vecteur de probabilités correspondant à une probabilité de migration à l'instant temporel associé, la migration consistant en au moins une réplication de la machine virtuelle (VM) exécutant ledit service sur un serveur hôte (MEHⱼ) choisi appartenant à une zone géographique de couverture contiguë à ladite zone géographique de couverture courante,
le calcul (52) des composantes du vecteur de probabilités mettant en oeuvre un ensemble de K poids, chaque poids étant associé à un instant temporel de migration et représentatif d'un gain prédit pour une migration audit instant temporel de migration associé,
- b) sélection (54) dans ledit ensemble de K instants temporels d'un instant temporel, dit instant temporel de migration sélectionné, en fonction du vecteur de probabilités calculé, l'instant temporel de migration sélectionné ayant une probabilité de migration correspondante maximale dans le vecteur de probabilités calculé,
- c) détermination (56), pour la migration à l'instant temporel de migration sélectionné, d'un nombre de réplications de la machine virtuelle à effectuer à l'instant temporel de migration sélectionné pour minimiser un coût en énergie de réplication tout en assurant un niveau de continuité de service, et calcul (56, 80) d'un gain prédit pour ladite migration à l'instant temporel de migration sélectionné.

2. Procédé selon la revendication 1, comportant en outre une mémorisation (62) de l'instant temporel de migration sélectionné et du nombre de réplications de la machine virtuelle à effectuer pour ladite requête de service donnée.

3. Procédé selon l'une des revendications 1 ou 2, mis en oeuvre par ledit serveur hôte courant pour une pluralité de requêtes de service sur une succession d'intervalles temporels, le procédé comportant une étape de :
d) mise à jour (58) du poids associé à l'instant temporel de migration sélectionné, pour un intervalle temporel suivant, la mise à jour étant fonction dudit gain prédit, et répétition des étapes a) à d) pour l'intervalle temporel suivant.

4. Procédé selon la revendication 3, dans lequel la mise à jour (58) du poids met en oeuvre une fonction exponentielle dudit gain prédit, et la probabilité associée à l'instant temporel de migration sélectionné pour l'intervalle temporel courant.

5. Procédé selon la revendication 4, dans lequel le poids associé à l'instant temporel sélectionné pour l'intervalle temporel suivant est obtenu par la formule : ${ω}_{k ∗} \left(t+1\right) = {ω}_{k ∗} \left(t\right) {e}^{\frac{{ρx}_{k ∗} \left(t\right)}{{Kp}_{k ∗} \left(t\right)}}$ Où k* est l'indice de l'instant temporel de migration sélectionné, *ω_{k*}*(*t*) est le poids associé à l'instant temporel sélectionné pour l'intervalle temporel courant (t), *ω_{k*}*(*t +* 1) est le poids associé à l'instant temporel sélectionné pour l'intervalle temporel suivant (t+1), ρ est un paramètre de pondération, et *p_{k*}*(*t*) est la probabilité associée à l'instant temporel de migration sélectionné.

6. Procédé selon la revendication 5, dans lequel, pour l'intervalle temporel courant (t), la probabilité associée à l'instant temporel Tₖ d'indice k est calculée par la formule : ${p}_{k} \left(t\right) = \left(1-ρ\right) \frac{{ω}_{k} \left(t\right)}{{\sum }_{j = 1}^{K} {ω}_{j} \left(t\right)} + \frac{ρ}{K} pour tout k ∈ \left\{1,2, …, K\right\}$

7. Procédé selon l'une quelconque des revendications 5 ou 6, dans lequel le paramètre de pondération est calculé dynamiquement (90-106) en fonction d'un calcul (96) de gain global cumulé pour chaque instant temporel, le gain global cumulé étant, pour chaque instant temporel, incrémenté, pour chaque requête de service traitée, du gain prédit pour la migration lorsque ledit instant temporel est sélectionné comme instant temporel de migration.

8. Procédé selon la revendication 7, dans lequel la valeur de paramètre de pondération est modifiée (94) lorsque le gain global cumulé maximum parmi lesdits gains globaux calculés dépasse (98) un seuil dépendant du nombre d'instants temporels.

9. Procédé selon l'une quelconque des revendications 1 à 8, dans lequel la détermination (56), pour la migration à l'instant temporel de migration sélectionné, pour chaque requête de service, d'un nombre de réplications de la machine virtuelle à effectuer à l'instant temporel de migration sélectionné, chaque réplication étant effectuée sur un serveur hôte choisi, met en oeuvre une minimisation (78) d'une fonction objectif dépendant d'une énergie consommée pour ledit nombre de réplications, sous contrainte d'une métrique de risque associée à l'accessibilité du ou des serveurs hôtes choisis (MEHⱼ) pour la réplication et d'une métrique de disponibilité, pour chaque réplication, de la machine virtuelle (VM) après réplication déclenchée à l'instant temporel de migration sélectionné.

10. Procédé selon la revendication 9, dans lequel la métrique de risque utilise une probabilité représentative d'une prédiction de mobilité, associée à chaque serveur hôte choisi, représentative de la probabilité que le dispositif mobile émetteur de ladite requête de service entre dans une zone de couverture géographique associée audit serveur hôte choisi.

11. Procédé selon la revendication 10, dans lequel pour un instant temporel de migration choisi, et pour une requête r(t) donnée, ladite métrique de risque est définie par $Risque \left(r\left(t\right),k*,{M}_{r}^{k *}\left(t\right)*\right) = 1 - {\sum }_{i = 1}^{{M}_{r}^{k *} \left(t\right) *} {p}_{r , k * , i}^{s} \left(t\right)$ Où k* est l'indice de l'instant temporel de migration sélectionné, ${M}_{r}^{k *} \left(t\right) *$ est le nombre de réplications de la machine virtuelle optimal calculé et ${p}_{r , k * , i}^{s} \left(t\right)$ est la probabilité représentative d'une prédiction de mobilité associée à un serveur hôte d'indice i.

12. Procédé selon l'une quelconque des revendications 9 à 11, dans lequel la métrique de disponibilité utilise, pour chaque réplication de machine virtuelle, une comparaison d'une durée de migration de la machine virtuelle et d'un temps restant avant un changement de serveur hôte pour le dispositif mobile émetteur de ladite requête de service.

13. Procédé selon l'une quelconque des revendications 9 à 12, dans lequel ladite énergie consommée est calculée en fonction du nombre de réplications et d'une taille de la machine virtuelle à migrer.

14. Procédé selon l'une quelconque des revendications 9 à 13, dans lequel ladite détermination (56), pour la migration à l'instant temporel de migration sélectionné, pour chaque requête de service, d'un nombre de réplications de la machine virtuelle à effectuer à l'instant temporel de migration sélectionné met en oeuvre, pour une pluralité de requêtes de service reçues sur un intervalle temporel courant, un calcul (72) de risque moyen et un calcul (74) de disponibilité moyenne sur ladite pluralité de requêtes.

15. Procédé selon la revendication 14, dans lequel ledit risque moyen calculé pour l'intervalle temporel courant est mis en oeuvre pour construire (76) une première queue virtuelle, pour un intervalle temporel suivant, en fonction d'un premier paramètre de contrôle associé, et ladite disponibilité moyenne est mise en oeuvre pour construire (76) une deuxième queue virtuelle, pour un intervalle temporel suivant, en fonction d'un deuxième paramètre de contrôle associé, la fonction objectif à minimiser étant dépendante desdites première et deuxième queues virtuelles.

16. Procédé selon l'une des revendications 9 à 15, dans lequel, pour une requête de service donnée, et pour un instant temporel de migration sélectionné, le gain prédit est égal à la valeur de ladite fonction objectif pour le nombre de réplications de la machine virtuelle déterminé.

17. Procédé selon l'une quelconque des revendications 1 à 16, dans lequel à chaque instant temporel est associé un nombre maximum de serveurs hôtes candidats, le nombre maximum de serveurs hôtes candidats associé à chaque instant temporel étant décroissant dans l'ordre croissant des instants temporels.

18. Programme d'ordinateur comportant des instructions logicielles qui, lorsqu'elles sont exécutées par un dispositif électronique programmable, mettent en oeuvre un procédé d'exécution à distance de services requis par au moins un dispositif mobile conforme aux revendications 1 à 17.

19. Système d'exécution à distance de services requis par au moins un dispositif mobile, notamment embarqué à bord d'un véhicule, le système comportant un réseau de communication cellulaire selon un protocole de communication au moins de quatrième génération, et une pluralité de serveurs de calcul, un service étant exécuté par une machine virtuelle d'un serveur de calcul, dit serveur hôte courant, le véhicule émetteur d'une requête de service ayant une position appartenant à une zone géographique de couverture de communication cellulaire courante, ledit serveur hôte courant étant associé à la zone géographique de couverture courante,
ledit serveur hôte courant (MEH_{c}) comportant un processeur (28) **caractérisé en ce qu'**il est configuré pour mettre en oeuvre, pour une requête de service donnée reçue pendant un intervalle temporel courant faisant partie d'une succession d'intervalles temporels:
- un module de calcul (32), pour l'intervalle temporel courant, d'un vecteur de probabilités à K composantes, chaque composante étant associée à un instant temporel donné d'un ensemble de K instants temporels prédéterminé, chaque composante du vecteur de probabilités correspondant à une probabilité de migration à l'instant temporel associé, la migration consistant en au moins une réplication de la machine virtuelle exécutant ledit service sur un serveur hôte choisi appartenant à une zone géographique de couverture contiguë à ladite zone géographique de couverture courante, le calcul des composantes du vecteur de probabilités mettant en oeuvre un ensemble de K poids, chaque poids étant associé à un instant temporel de migration et représentatif d'un gain prédit pour une migration audit instant temporel de migration associé,
- un module (34) de sélection dans ledit ensemble de K instants temporels d'un instant temporel, dit instant temporel de migration sélectionné, en fonction du vecteur de probabilités calculé, l'instant temporel de migration sélectionné ayant une probabilité de migration correspondante maximale dans le vecteur de probabilités calculé,
- un module (36) détermination, pour la migration à l'instant temporel de migration sélectionné, d'un nombre de réplications de la machine virtuelle à effectuer à l'instant temporel de migration sélectionné pour minimiser un coût en énergie de réplication tout en assurant un niveau de continuité de service, et calcul d'un gain prédit pour ladite migration à l'instant temporel de migration sélectionné.

20. Système selon la revendication 19, comportant en outre un module (38) de mise à jour du poids associé à l'instant temporel de migration sélectionné, pour un intervalle temporel suivant, la mise à jour étant fonction dudit gain prédit.

## Patentansprüche

1. Verfahren zur Fernausführung von Diensten, die von mindestens einer mobilen Vorrichtung, insbesondere an Bord eines Fahrzeugs (8), über ein Mobilfunkkommunikationsnetz gemäß einem Kommunikationsprotokoll mindestens der vierten Generation angefordert werden, wobei ein Dienst von einer virtuellen Maschine (VM) eines Rechenservers (MEH_{c}), bezeichnet als aktueller Host-Server, ausgeführt wird, wobei die mobile Vorrichtung, die eine Dienstanforderung sendet, eine Position aufweist, die zu einem geografischen Abdeckungsbereich der aktuellen Mobilfunkkommunikation (4₁) gehört, wobei der aktuelle Host-Server mit dem aktuellen geografischen Abdeckungsbereich assoziiert ist,
wobei das Verfahren **dadurch gekennzeichnet ist, dass** es die folgenden Schritte umfasst, die von einem Prozessor des aktuellen Host-Servers (MEH_{c}) für eine gegebene Dienstanforderung, die während eines aktuellen Zeitintervalls empfangen wird, implementiert werden:
- a) für das aktuelle Zeitintervall (t), Berechnen (52) eines Wahrscheinlichkeitsvektors mit K Komponenten, wobei jede Komponente mit einem gegebenen Zeitpunkt (Tₖ) eines vorbestimmten Satzes von K Zeitpunkten (T₁, ...Tᵢ, ..., T_{K}) assoziiert ist, jede Komponente des Wahrscheinlichkeitsvektors einer Migrationswahrscheinlichkeit an dem assoziierten Zeitpunkt entspricht, wobei die Migration aus mindestens einer Replikation der virtuellen Maschine (VM) besteht, die den Dienst auf einem ausgewählten Host-Server (MEHⱼ) ausführt, der zu einem geografischen Abdeckungsbereich gehört, der an den aktuellen geografischen Abdeckungsbereich angrenzt,
die Berechnung (52) der Komponenten des Wahrscheinlichkeitsvektors einen Satz von K Gewichten implementiert, jedes Gewicht mit einem Migrationszeitpunkt assoziiert ist und repräsentativ für eine vorhergesagte Verstärkung für eine Migration an dem assoziierten Migrationszeitpunkt ist,
- b) Auswählen (54) eines Zeitpunkts aus der Menge von K Zeitpunkten, des sogenannten ausgewählten Migrationszeitpunkts, abhängig von dem berechneten Wahrscheinlichkeitsvektor, wobei der ausgewählte Migrationszeitpunkt eine maximale entsprechende Migrationswahrscheinlichkeit in dem berechneten Wahrscheinlichkeitsvektor aufweist,
- c) Bestimmen (56), für die Migration an dem ausgewählten Migrationszeitpunkt, einer Anzahl an Replikationen der virtuellen Maschine, die an dem ausgewählten Migrationszeitpunkt durchzuführen sind, um eine Replikationsenergiekosten zu minimieren und gleichzeitig ein Niveau der Dienstkontinuität zu gewährleisten, und Berechnen (56, 80) einer vorhergesagten Verstärkung für die Migration an dem ausgewählten Migrationszeitpunkt.

2. Verfahren nach Anspruch 1, ferner umfassend ein Speichern (62) des ausgewählten Migrationszeitpunkts und der Anzahl an Replikationen der virtuellen Maschine, die für die gegebene Dienstanforderung durchgeführt werden sollen.

3. Verfahren nach einem der Ansprüche 1 oder 2, das von dem aktuellen Host-Server für eine Vielzahl von Dienstanforderungen über eine Folge von Zeitintervallen implementiert wird, das Verfahren umfassend einen folgenden Schritt:
d) Aktualisieren (58) des Gewichts, das mit dem ausgewählten Migrationszeitpunkt assoziiert ist, für ein nächstes Zeitintervall, wobei die Aktualisierung eine Funktion der vorhergesagten Verstärkung ist, und Wiederholen der Schritte a) bis d) für das nächste Zeitintervall.

4. Verfahren nach Anspruch 3, wobei die Aktualisierung (58) des Gewichts eine Exponentialfunktion der vorhergesagten Verstärkung und der Wahrscheinlichkeit implementiert, die mit dem ausgewählten Migrationszeitpunkt für das aktuelle Zeitintervall assoziiert ist.

5. Verfahren nach Anspruch 4, wobei das Gewicht, das mit dem ausgewählten Zeitpunkt für das nächste Zeitintervall assoziiert ist, durch die folgende Formel erlangt wird: ${ω}_{k ∗} \left(t+1\right) = {ω}_{k ∗} \left(t\right) {e}^{\frac{{ρx}_{k ∗} \left(t\right)}{{Kp}_{k ∗} \left(t\right)}}$ wobei k* der Index des ausgewählten Migrationszeitpunkts ist, *ω_{k*}*(*t*) das Gewicht ist, das mit dem ausgewählten Zeitpunkt für das aktuelle Zeitintervall (t) assoziiert ist, *ω_{k*}*(*t +* 1) das Gewicht ist, das mit dem Zeitpunkt assoziiert ist, das für das nächste Zeitintervall (t+1) ausgewählt ist, ρ ein Gewichtungsparameter ist, und *p_{k*}*(*t*) die mit dem ausgewählten Migrationszeitpunkt assoziierte Wahrscheinlichkeit ist.

6. Verfahren nach Anspruch 5, wobei, für das aktuelle Zeitintervall (t), die Wahrscheinlichkeit, die mit dem Zeitpunkt Tₖ mit Index k assoziiert ist, gemäß der folgenden Formel berechnet wird: ${p}_{k} \left(t\right) = \left(1-ρ\right) \frac{{ω}_{k} \left(t\right)}{{\sum }_{j = 1}^{K} {ω}_{j} \left(t\right)} + \frac{ρ}{K} für jedes k ∈ \left\{1,2,…,K\right\}$

7. Verfahren nach einem der Ansprüche 5 oder 6, wobei der Gewichtungsparameter dynamisch (90-106) basierend auf einer Berechnung (96) der kumulierten Gesamtverstärkung für jeden Zeitpunkt berechnet wird, wobei die kumulierte Gesamtverstärkung für jeden Zeitpunkt für jede verarbeitete Dienstanforderung um die für die Migration vorhergesagte Verstärkung erhöht wird, wenn der Zeitpunkt als Migrationszeitpunkt ausgewählt wird.

8. Verfahren nach Anspruch 7, wobei der Wert des Gewichtungsparameters geändert wird (94), wenn der maximale kumulierte Gesamtverstärkung unter den berechneten Gesamtverstärkungen einen von der Anzahl an Zeitpunkten abhängigen Schwellenwert überschreitet (98).

9. Verfahren nach einem der Ansprüche 1 bis 8, wobei die Bestimmung, für die Migration an dem ausgewählten Migrationszeitpunkt für jede Dienstanforderung, einer Anzahl an Replikationen der virtuellen Maschine (56) wird, die an dem ausgewählten Migrationszeitpunkt durchgeführt werden sollen, wobei jede Replikation auf einem ausgewählten Host-Server durchgeführt wird, eine Minimierung (78) einer Zielfunktion implementiert, die von einer für die genannte Anzahl an Replikationen verbrauchten Energie abhängt, unter Vorgabe einer Risikometrik, die mit der Zugänglichkeit des oder der für die Replikation ausgewählten Host-Server (MEHⱼ), und einer Verfügbarkeitsmetrik für jede Replikation der virtuellen Maschine (VM) nach der Replikation, die zu dem ausgewählten Migrationszeitpunkt ausgelöst wurde, assoziiert ist, durchgeführt wird.

10. Verfahren nach Anspruch 9, wobei die Risikometrik eine Wahrscheinlichkeit verwendet, die repräsentativ für eine Mobilitätsvorhersage ist, die mit jedem ausgewählten Host-Server assoziiert ist und repräsentativ für die Wahrscheinlichkeit ist, dass die mobile Vorrichtung, die die Dienstanforderung ausgibt, in einen geografischen Abdeckungsbereich eintritt, der mit dem ausgewählten Host-Server assoziiert ist.

11. Verfahren nach Anspruch 10, wobei die Risikometrik für einen ausgewählten Migrationszeitpunkt und für eine gegebene Anforderung r(t) definiert ist als $Risiko \left(r\left(t\right),k*,{M}_{r}^{k *}\left(t\right)*\right) = 1 - {\sum }_{i = 1}^{{M}_{r}^{k *} \left(t\right) *} {p}_{r , k * , i}^{s} \left(t\right)$ wobei k* der Index des ausgewählten Migrationszeitpunkts ist, ${M}_{r}^{k *} \left(t\right) *$ die berechnete Anzahl an Replikationen der optimalen virtuellen Maschine ist und ${p}_{r , k * , i}^{s} \left(t\right)$ die repräsentative Wahrscheinlichkeit einer Mobilitätsvorhersage ist, die mit einem Host-Server mit Index i assoziiert ist.

12. Verfahren nach einem der Ansprüche 9 bis 11, wobei die Verfügbarkeitsmetrik für jede Replikation einer virtuellen Maschine einen Vergleich einer Migrationsdauer der virtuellen Maschine und einer verbleibenden Zeit vor einem Wechsel des Host-Servers für die mobile Vorrichtung, die die Dienstanforderung ausgibt, verwendet.

13. Verfahren nach einem der Ansprüche 9 bis 12, wobei die verbrauchte Energie basierend auf der Anzahl an Replikationen und einer Größe der zu migrierenden virtuellen Maschine berechnet wird.

14. Verfahren nach einem der Ansprüche 9 bis 13, wobei die Bestimmung, für die Migration an dem ausgewählten Migrationszeitpunkt für jede Dienstanforderung, einer Anzahl von Replikationen der virtuellen Maschine (56) wird, für eine Vielzahl von Dienstanforderungen, die über ein aktuelles Zeitintervall empfangen werden, eine Berechnung (72) des mittleren Risikos und eine Berechnung (74) der mittleren Verfügbarkeit an der Vielzahl von Anforderungen implementiert.

15. Verfahren nach Anspruch 14, wobei das für das aktuelle Zeitintervall berechnete mittlere Risiko implementiert wird, um eine erste virtuelle Warteschlange für ein nächstes Zeitintervall abhängig von einem ersten assoziierten Kontrollparameter zu konstruieren (76), und die mittlere Verfügbarkeit implementiert wird, um eine zweite virtuelle Warteschlange für ein nächstes Zeitintervall abhängig von einem zweiten assoziierten Kontrollparameter zu konstruieren (76), wobei die zu minimierende Zielfunktion von der ersten und der zweiten virtuellen Warteschlange abhängig ist.

16. Verfahren nach einem der Ansprüche 9 bis 15, wobei für eine gegebene Dienstanforderung und für einen ausgewählten Migrationszeitpunkt die vorhergesagte Verstärkung gleich wie der Wert der Zielfunktion für die bestimmte Anzahl an Replikationen der virtuellen Maschine ist.

17. Verfahren nach einem der Ansprüche 1 bis 16, wobei mit jedem Zeitpunkt eine maximale Anzahl von Host-Server-Kandidaten assoziiert ist, wobei die maximale Anzahl von Host-Server-Kandidaten, die mit jedem Zeitpunkt assoziiert sind, in der aufsteigenden Reihenfolge der Zeitpunkte abnimmt.

18. Computerprogramm, umfassend Softwareanweisungen, die, wenn sie von einer programmierbaren elektronischen Vorrichtung ausgeführt werden, ein Verfahren zur Fernausführung von Diensten implementieren, die von mindestens einer mobile Vorrichtung gemäß den Ansprüchen 1 bis 17 angefordert werden.

19. System zur Fernausführung von Diensten, die von mindestens einer mobilen Vorrichtung, insbesondere an Bord eines Fahrzeugs, angefordert werden, das System umfassend ein Mobilfunkkommunikationsnetz gemäß einem Kommunikationsprotokoll mindestens der vierten Generation und eine Vielzahl von Rechenservern, wobei ein Dienst von einer virtuellen Maschine eines Rechenservers, dem sogenannten aktuellen Host-Server, ausgeführt wird, das Fahrzeug, das eine Dienstanforderung sendet, eine Position aufweist, die zu einem geografischen Gebiet mit aktueller Mobilfunkkommunikationsabdeckung gehört, wobei der aktuelle Host-Server mit dem aktuellen geografischen Abdeckungsbereich assoziiert ist,
der aktuelle Host-Server (MEH_{c}) umfassend einen Prozessor (28), **dadurch gekennzeichnet, dass** er konfiguriert ist, um für eine gegebene Dienstanforderung, die während eines aktuellen Zeitintervalls empfangen wird, das Teil einer Folge von Zeitintervallen ist, Folgendes zu implementieren:
- ein Berechnungsmodul (32), für das aktuelle Zeitintervall, eines Wahrscheinlichkeitsvektor mit K Komponenten, wobei jede Komponente mit einem gegebenen Zeitpunkt eines vorbestimmten Satzes von K Zeitpunkten assoziiert ist, jede Komponente des Wahrscheinlichkeitsvektors einer Migrationswahrscheinlichkeit an dem assoziierten Zeitpunkt entspricht, wobei die Migration aus mindestens einer Replikation der virtuellen Maschine besteht, die den Dienst auf einem ausgewählten Host-Server ausführt, der zu einem geografischen Abdeckungsbereich gehört, der an den aktuellen geografischen Abdeckungsbereich angrenzt, die Berechnung der Komponenten des Wahrscheinlichkeitsvektors einen Satz von K Gewichten implementiert, jedes Gewicht mit einem Migrationszeitpunkt assoziiert ist und repräsentativ für eine vorhergesagte Verstärkung für eine Migration an dem assoziierten Migrationszeitpunkt ist,
- ein Modul (34) zur Auswahl eines Zeitpunkts aus der Menge von K Zeitpunkten, des sogenannten ausgewählten Migrationszeitpunkts, abhängig von dem berechneten Wahrscheinlichkeitsvektor, wobei der ausgewählte Migrationszeitpunkt eine maximale entsprechende Migrationswahrscheinlichkeit in dem berechneten Wahrscheinlichkeitsvektor aufweist,
- ein Bestimmungsmodul (36), für die Migration an dem ausgewählten Migrationszeitpunkt, einer Anzahl an Replikationen der virtuellen Maschine, die an dem ausgewählten Migrationszeitpunkt durchzuführen sind, um eine Replikationsenergiekosten zu minimieren und gleichzeitig ein Niveau der Dienstkontinuität zu gewährleisten, und eine vorhergesagte Verstärkung für die Migration an dem ausgewählten Migrationszeitpunkt zu berechnen.

20. System nach Anspruch 19, ferner umfassend ein Modul (38) zur Aktualisierung des mit dem ausgewählten Migrationszeitpunkt verbundenen Gewichts für ein nächstes Zeitintervall, wobei die Aktualisierung von der vorhergesagten Verstärkung abhängt.

## Claims

1. A method of remote execution of services required by at least one mobile device, in particular on board a vehicle (8), via a cellular communication network according to a communication protocol of at least fourth generation, a service being executed by a virtual machine (VM) of a computing server (MEH_{c}), referred to as the current host server, the mobile device sending a service request having a position belonging to a geographical area of current cellular communication coverage (4₁), said current host server being associated with the geographical area of current coverage,
the method being **characterized in that** same comprises the following steps, implemented by a processor of said current host server (MEH_{c}), for a given service request, received during a current time interval:
- a) for the current time interval (t), calculation (52) of a probability vector with K components, each component being associated with a given moment of time (Tₖ) of a predetermined set of K moments of time (T₁,...Tᵢ,.., T_{K}), each component of the probability vector corresponding to a probability of migration at the associated moment of time, the migration consisting of at least one replication of the virtual machine (VM) executing said service on a chosen host server (MEHⱼ) belonging to a geographical area of coverage contiguous to said current geographical area of coverage,
the calculation (52) of the components of the probability vector implementing a set of K weights, each weight being associated with a migration moment of time and representative of a gain predicted for a migration at said associated migration moment of time,
- b) selection (54) from said set of K moments of time of a moment of time, referred to as the selected migration moment of time, according to the calculated probability vector, the selected migration moment of time having a maximum corresponding probability of migration in the calculated probability vector,
- c) determination (56), for the migration at the selected migration moment of time, of a number of replications of the virtual machine to be performed at the selected migration moment of time so as to minimize a cost in terms of replication energy while ensuring a level of continuity of service, and calculation (56, 80) of a predicted gain for said migration at the selected migration moment of time.

2. The method according to claim 1, further including a storage (62) of the selected migration moment of time and the number of replications of the virtual machine to be performed for said given service request.

3. The method according to one of claims 1 or 2, implemented by said current host server for a plurality of service requests over a succession of time intervals, the method including a step of:
d) update (58) of the weight associated with the selected migration moment of time, for a following time interval, the update depending on said predicted gain, and repetition of steps a) to d) for the following time interval.

4. The method according to claim 3, wherein the update (58) of the weight implements an exponential function of said predicted gain, and the probability associated with the selected migration moment of time for the current time interval.

5. The method according to claim 4, wherein the weight associated with the selected moment of time for the following time interval is obtained by the formula: ${ω}_{k ∗} \left(t+1\right) = {ω}_{k ∗} \left(t\right) {e}^{\frac{{ρx}_{k ∗} \left(t\right)}{{Kp}_{k ∗} \left(t\right)}}$ Where k* is the index of the selected migration moment of time, *ω_{k *}* (*t*) is the weight associated with the selected moment of time for the current time interval (t), *ω_{k *}* (*t +* 1) is the weight associated with the selected moment of time for the next time interval (t+1), ρ is a weighting parameter, *p_{k *}* (*t*) and is the probability associated with the selected migration moment of time.

6. The method according to claim 5, wherein, for the current time interval (t), the probability associated with the moment of time Tₖ of index k is calculated by the formula: ${p}_{k} \left(t\right) = \left(1-ρ\right) \frac{{ω}_{k} \left(t\right)}{{\sum }_{j = 1}^{K} {ω}_{j} \left(t\right)} + \frac{ρ}{K} for any k ∈ \left\{1,2,…,K\right\}$

7. The method according to any of claims 5 or 6, wherein the weighting parameter is calculated dynamically (90-106) based on a calculation (96) of cumulative global gain for each moment of time, the cumulative global gain being incremented, for each moment of time, for each service request processed, by the predicted gain for migration when said moment of time is selected as the migration moment of time.

8. The method according to claim 7, wherein the weighting parameter value is changed (94) when the maximum cumulative overall gain among said calculated overall gains exceeds (98) a threshold dependent on the number of moments of time.

9. The method according to any of claims 1 to 8, wherein determination (56), for a migration at the selected migration moment of time, for each service request, of a number of replications of the virtual machine to be performed at the selected migration moment of time, each replication being performed on a selected host server, implements a minimization (78) of an target function depending on an energy consumed for said number of replications, under the constraint of a risk metric associated with the accessibility of the host server(s) (MEHⱼ) chosen for the replication and of an availability metric, for each replication, of the virtual machine (VM) triggered after the replication triggered at the selected migration moment of time.

10. The method of claim 9, wherein the risk metric uses a probability representative of a prediction of mobility associated with each selected host server, representative of the probability that the mobile device sending said service request enters a geographical coverage area associated with said chosen host server.

11. The method according to claim 10, wherein for a selected migration moment of time, and for a given request r(t), said risk metric is defined by: $Risk \left(r\left(t\right),k*,{M}_{r}^{k *}\left(t\right)*\right) = 1 - {\sum }_{i = 1}^{{M}_{r}^{k *} \left(t\right) *} {p}_{r , k * , i}^{s} \left(t\right)$ Where k* is the index of the selected migration moment of time, ${M}_{r}^{k *} \left(t\right) *$ is the number of replications of the optimal virtual machine calculated, and ${p}_{r , k * , i}^{s} \left(t\right)$ is the probability representative of a prediction of mobility associated with a host server of index i.

12. The method according to any of claims 9 to 11, wherein the availability metric uses, for each replication of virtual machine, a comparison of a migration moment of time of the virtual machine and of a time remaining before a change of host server for the mobile device sending said service request.

13. The method according to any of claims 9 to 12, wherein said consumed energy is calculated based on the number of replications and a size of the virtual machine to be migrated.

14. The method according to any of claims 9 to 13, wherein said determination (56), for the migration at the selected migration moment of time, for each service request, of a number of replications of the virtual machine to be performed at the selected migration moment of time implements, for a plurality of service requests received over a current time interval, a mean risk calculation (72) and a mean availability calculation (74) availability over said plurality of requests.

15. The method according to claim 14, wherein said calculated mean risk for the current time interval is used to construct (76) a first virtual queue, for a subsequent time interval, according to an associated first control parameter, and said mean availability is used to construct (76) a second virtual queue, for a subsequent time interval, depending on an associated second control parameter, the objective function to be minimized being dependent on said first and second virtual queues.

16. The method according to one of claims 9 to 15, wherein, for a given service request, and for a selected migration moment of time, the predicted gain is equal to the value of said objective function for the determined number of replications of the virtual machine.

17. The method according to any of claims 1 to 16, wherein a maximum number of candidate host servers is associated with each moment of time, the maximum number of candidate host servers associated with each moment of time decreasing in the ascending order of moments of time.

18. A computer program including software instructions which, when executed by a programmable electronic system, implement a method of remote execution of services required by at least one mobile device according to claims 1 to 17.

19. A method of remote execution of services required by at least one mobile device, in particular on board a vehicle, the system including a cellular communication network according to a communication protocol at least of fourth generation, and a plurality of computing servers, a service being executed by a virtual machine of a computing server, known as the current host server, the vehicle sending a service request having a position belonging to a current geographical area of cellular communication coverage, said current host server being associated with the current geographical area of coverage,
said current host server (MEH_{c}) including a processor (28) **characterized in that** same is configured to implement, for a given service request received during a current time interval belonging to a succession of time intervals:
- a module (32) for calculating, for the current time interval, calculation of a probability vector with K components, each component being associated with a given moment of time of a set of K predetermined instants, each component of the probability vector corresponding to a probability of migration at the associated moment of time, the migration consisting of at least one replication of the virtual machine executing said service on a chosen host server belonging to a geographical area of coverage contiguous to said geographical area of current coverage, the calculation of the components of the probability vector implementing a set of K weights, each weight being associated with a migration moment of time and representative of a gain predicted for a migration at said associated migration moment of time,
- a module (34) for selecting, from said set of K moments of time, a moment of time, referred to as the selected migration moment of time, according to the calculated probability vector, the selected migration moment of time having a maximum corresponding probability of migration in the calculated probability vector,
- a module (36) for determining, for the migration at the selected migration moment of time, a number of replications of the virtual machine to be performed at the selected migration moment of time so as to minimize a cost in terms of replication energy while ensuring a level of continuity of service, and calculation of a predicted gain for said migration at the selected migration moment of time.

20. The system according to claim 19, further including a module (38) for updating the weight associated with the selected migration moment of time for a subsequent time interval, the update depending on said predicted gain.
